(19) Europäisches Patentamt
European Patent Office
Office européen des brevets

(11) **EP 3 611 845 A1**

(12) **EUROPEAN PATENT APPLICATION**
published in accordance with Art. 153(4) EPC

(43) Date of publication:
**19.02.2020 Bulletin 2020/08**

(51) Int Cl.:
***H04B 7/0456*** (2017.01)

(21) Application number: **18784266.1**

(22) Date of filing: **10.04.2018**

(86) International application number:
**PCT/CN2018/082489**

(87) International publication number:
**WO 2018/188584 (18.10.2018 Gazette 2018/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.04.2017 CN 201710239603**

(71) Applicant: **ZTE Corporation**
**Shenzhen, Guangdong 518057 (CN)**

(72) Inventor: **WU, Hao**
**Shenzhen**
**Guangdong 518057 (CN)**

(74) Representative: **Baudler, Ron**
**Canzler & Bergmeier**
**Patentanwälte Partnerschaft mbB**
**Friedrich-Ebert-Straße 84**
**85055 Ingolstadt (DE)**

(54) **SPACE DIVISION MULTIPLEXING METHOD AND APPARATUS**

(57) Disclosed are a space division multiplexing method and apparatus, the method comprising: performing (S101) conjugate multiplication on a channel response matrix of a space division user to obtain a conjugate multiplication matrix; extending (S102) the conjugate multiplication matrix to obtain an extended matrix, and performing an inversion operation on the extended matrix to obtain an inverse matrix of the extended matrix; and encoding (S103) an element corresponding to the space division user in the inverse matrix to obtain a pre-coding matrix for the space division user.

FIG. 1

**Description**

**FIELD OF THE INVENTION**

The present disclosure relates to the field of communications technologies, and in particular, to a space division multiplexing method and apparatus.

**BACKGROUND**

Multiple-input Multiple-output (MIMO) is one of the key technologies recognized by Long Term Evolution (LTE) and the fifth generation mobile communication technology (5th generation, 5G). This technology can greatly improve the frequency efficiency and significantly improve the capacity of the wireless network. Multiple-input Multiple-output can control antenna lobe more finely through large-scale antenna deployment to fit the beam forming.

In the downlink of the MIMO multi-user communication system, when a transmitting end obtains the channel state characteristic, pre-coding can be carried out, so that the receiving and transmitting are processed jointly to obtain a better communication performance. Pre-coding is to perform a preprocessing on a signal transmitted by a transmitting end under the condition of known channel state information, so that a receiver can conveniently perform signal detection. Linear pre-coding is a simple pre-coding method in the pre-coding technologies, and can be divided into two types which are a Zero Forcing (ZF) based linear pre-coding and a Minimum Mean Square Error (MMSE) based linear pre-coding according to different selected coding criteria. The principle and implementation of the Zero Forcing based linear pre-coding are simple, but the possibility of sharply amplifying noise in the processing process can affect the performance of the system. The goal of the Minimum Mean Square Error based linear pre-coding is to minimize the mean square error between the received signal and the transmitted data with more stable performance, but it is relatively difficult to implement.

The number of space division users of the multiple-input multiple-output system is variable, and design optimization is required according to various possible user number conditions. If different schemes of the numbers of the space division users can be unified, the system complexity can be reduced to a great extent.

**SUMMARY**

The following is a summary of the subject matter described in detail herein. This summary is not intended to limit the scope of the claims.

There are provided a space division multiplexing method and apparatus in embodiments of the disclosure, which can realize pre-coding schemes suitable for various possible user numbers with a varied number of space division users.

According to an embodiment of the present disclosure, there is provided a space division multiplexing method, including: performing conjugate multiplication on a channel response matrix of a space division user to obtain a conjugate multiplication matrix; extending the conjugate multiplication matrix to obtain an extended matrix, and performing an inversion operation on the extended matrix to obtain an inverse matrix of the extended matrix; and encoding an element corresponding to the space division user in the inverse matrix to obtain a pre-coding matrix for the space division user.

In an exemplary embodiment, the step of extending the conjugate multiplication matrix to obtain the extended matrix includes: constructing a channel response matrix of a virtual user which is orthogonal to the channel response matrix of the space division user; and extending the conjugate multiplication matrix by using the channel response matrix of the virtual user to obtain the extended matrix.

In an exemplary embodiment, the step of extending the conjugate multiplication matrix to obtain the extended matrix includes: extending the conjugate multiplication matrix by using a zero matrix and an identity matrix to obtain the extended matrix.

In an exemplary embodiment, the step of encoding an element corresponding to the space division user in the inverse matrix to obtain the pre-coding matrix for the space division user includes: extracting the element corresponding to the space division user from the inverse matrix, and operating on the extracted element corresponding to the space division user by using a Zero Forcing algorithm to obtain the pre-coding matrix for the space division user.

In an exemplary embodiment, the method further includes: transmitting a useful signal to the space division user, and transmitting a return-to-zero signal to other users, wherein the useful signal is obtained by preprocessing a signal to be transmitted by using the precoding matrix.

According to an embodiment of the present disclosure, there is provided a space division multiplexing apparatus, including: an operation module, configured to perform conjugate multiplication on a channel response matrix of a space division user to obtain a conjugate multiplication matrix; an extension module, configured to extend the conjugate multiplication matrix to obtain an extended matrix, and perform an inversion operation on the extended matrix to obtain an inverse matrix of the extended matrix; and an encoding module, configured to encode an element corresponding to the space division user in the inverse matrix to obtain a pre-coding matrix for the space division user.

In an exemplary embodiment, the extension module is configured to construct a channel response matrix of a virtual user which is orthogonal to the channel response matrix of the space division user, and extend the conjugate multiplication matrix by using the channel response matrix of the virtual user to obtain the extended matrix.

In an exemplary embodiment, the extension module is configured to extend the conjugate multiplication matrix by using a zero matrix and an identity matrix to obtain the extended matrix.

In an exemplary embodiment, the encoding module is configured to extract the element corresponding to the space division user from the inverse matrix, and operate on the extracted element corresponding to the space division user by using a zero forcing algorithm to obtain the pre-coding matrix for the space division user.

In an exemplary embodiment, the apparatus further includes: a transmitting module, configured to transmit a useful signal to the space division user and transmit a return-to-zero signal to other users, wherein the useful signal is obtained by preprocessing a signal to be transmitted by using the pre-coding matrix.

According to an embodiment of the present disclosure, there is provided a computer-readable storage medium storing computer-executable instructions, wherein when executed by a processor, the computer-executable instructions implement the space division multiplexing method as described above.

The schemes provided by the embodiments of the disclosure have the following beneficial effects: according to the disclosure, the inversion operation on the extended matrix can unify pre-coding schemes of different numbers of the space division users, reduces system complexity and improves communication system performance.

Other aspects will become apparent upon reading and understanding of the drawings and detailed description.

**BRIEF DESCRIPTION OF THE DRAWINGS**

FIG. 1 is a first flowchart of a method for space division multiplexing according to an embodiment of the present disclosure;
FIG. 2 is a first block diagram of an apparatus for space division multiplexing according to an embodiment of the present disclosure;
FIG. 3 is a second flowchart of a method for space division multiplexing according to an embodiment of the present disclosure;
FIG. 4 is a second block diagram of an apparatus for space division multiplexing according to an embodiment of the present disclosure.

**DETAILED DESCRIPTION OF THE EMBODIMENTS**

The exemplary embodiments of the present disclosure will be described in detail below with reference to the accompanying drawings. It should be understood that the exemplary embodiments described below are only for illustrating and explaining the present disclosure, and are not intended to limit the present disclosure.

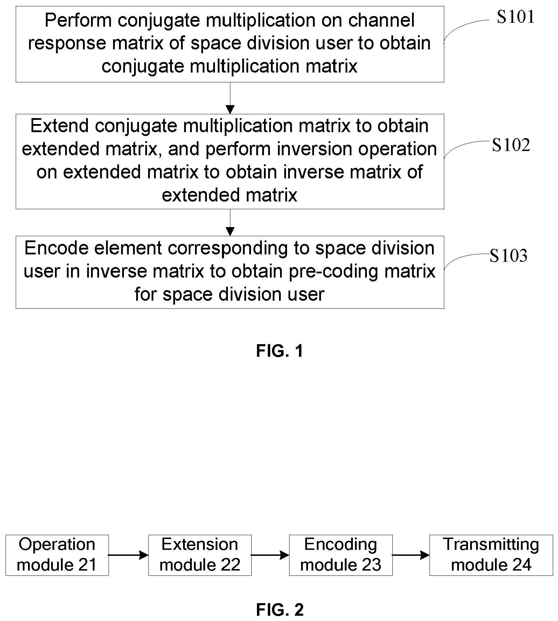

FIG. 1 is a first flowchart of a method for space division multiplexing according to an embodiment of the present disclosure, and as shown in FIG. 1, the method includes the following steps.

Step S101: performing conjugate multiplication on a channel response matrix of a space division user to obtain a conjugate multiplication matrix.

Step S101 includes: multiplying the channel response matrix of the space division user by a conjugate of the matrix to obtain the conjugate multiplication matrix, after the channel response matrix of the space division user is obtained by utilizing reciprocity of an uplink channel and a downlink channel.

Step S102: extending the conjugate multiplication matrix to obtain an extended matrix, and performing an inversion operation on the extended matrix to obtain an inverse matrix of the extended matrix.

There are two ways to obtain the extended matrix in Step S102, which include:

1. constructing a channel response matrix of a virtual user which is orthogonal to the channel response matrix of the space division user, and then extending the conjugate multiplication matrix by using the channel response matrix of the virtual user to obtain the extended matrix;
2. extending the conjugate multiplication matrix by using a zero matrix and an identity matrix to obtain the extended matrix.

Step S103: encoding an element corresponding to the space division user in the inverse matrix to obtain a pre-coding matrix for the space division user.

Step S103 includes: extracting the element corresponding to the space division user from the inverse matrix obtained in the Step S102, and operating on the extracted element corresponding to the space division user by using a Zero Forcing algorithm to obtain the pre-coding matrix for the space division user.

After Step S103 is executed, the signal to be transmitted is preprocessed by using the pre-coding matrix to obtain a useful signal. The useful signal is transmitted to the space division user, and a return-to-zero signal is transmitted to other users to avoid interfering with other users.

It will be understood by those skilled in the art that all or part of the steps in the method for implementing the above embodiments can be completed by a program for instructing related hardware. The program can be stored in a computer readable storage medium, and the program includes Steps S101 to S103 when being executed. Herein, the storage medium can be ROM/RAM, magnetic disk, optical disk, and U disk, for example.

FIG. 2 is a first block diagram of an apparatus for space division multiplexing according to an embodiment of the present disclosure, and as shown in FIG. 2, the apparatus includes:

an operation module 21 configured to perform conjugate multiplication on a channel response matrix of a space division user to obtain a conjugate multiplication matrix;

an extension module 22 configured to extend the conjugate multiplication matrix to obtain an extended matrix, and perform an inversion operation on the extended matrix to obtain an inverse matrix of the extended matrix; and

an encoding module 23 configured to encode an element corresponding to the space division user in the inverse matrix to obtain a pre-coding matrix for the space division user.

The apparatus further includes:

a transmitting module 24 configured to transmit a useful signal to the space division user and transmit a return-to-zero signal to other users, wherein the useful signal is obtained by preprocessing a signal to be transmitted by using the pre-coding matrix.

The operation module 21 is configured to multiply the channel response matrix of the space division user by a conjugate of the matrix to obtain the conjugate multiplication matrix, after the channel response matrix of the space division user is obtained by utilizing reciprocity of an uplink channel and a downlink channel. The extension module 22 is configured to construct a channel response matrix of a virtual user which is orthogonal to the channel response matrix of the space division user, and extend the conjugate multiplication matrix by using the channel response matrix of the virtual user to obtain the extended matrix, or extend the conjugate multiplication matrix by using a zero matrix and an identity matrix to obtain the extended matrix, and then solve the inverse matrix of the expansion matrix. The encoding module 23 is configured to extract the element corresponding to the space division user from the inverse matrix, and operate on the extracted element corresponding to the space division user by using a zero forcing algorithm to obtain the pre-coding matrix for the space division user, so as to use the pre-coding matrix to preprocess a signal to be transmitted to obtain the useful signal. The transmitting module 24 is used to transmit the useful signal to the space division user, and meanwhile, the transmitting module 24 transmits the return-to-zero signal to other users.

The space division multiplexing method and apparatus according to the present disclosure can be applied to a communication system, such as a Base Band Unit (BBU) of a base station, and can be implemented by a control module such as a Digital Signal Processing (DSP) module and a Field-Programmable Gate Array (FPGA) module, to improve the performance of the communication system.

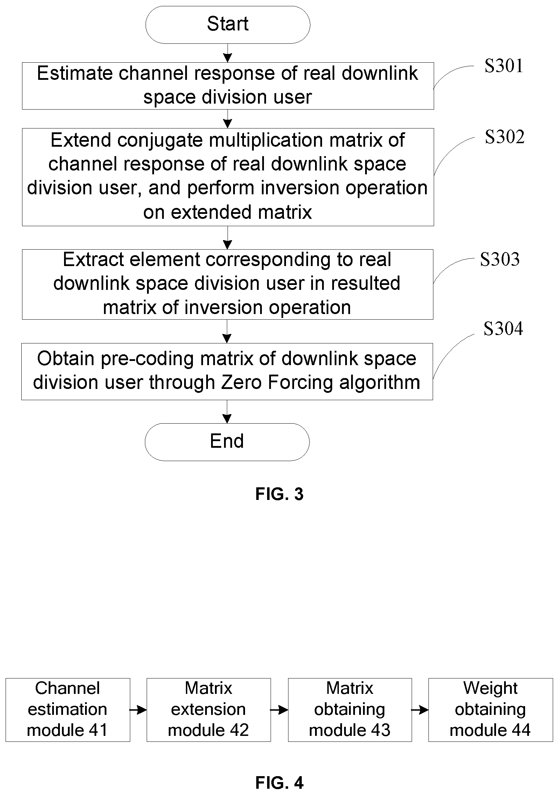

FIG. 3 is a second flowchart of a method for space division multiplexing according to an embodiment of the present disclosure, and as shown in FIG. 3, the method generally includes the following four steps:

Step S301: estimating a channel response of a space division user.

By using reciprocity of uplink channel and downlink channel of a Time Division multiplexing (TDD) system, a channel response H of a downlink space division user can be obtained through a channel response of a detection signal (Sounding).

Step S302: extending a conjugate multiplication matrix of the channel response of the space division user, and performing an inversion operation on the extended matrix.

There are two extension ways:

The first extension include: constructing a channel response F of a virtual user, so that the channel response of the virtual user is orthogonal to the channel response of the space division user; and adding the channel response of the virtual user to the channel response of the space division user, so that a matrix after the matrix $HH^H$ is extended by performing conjugate multiplication on the channel response H of the space division user is as follows:

$$\begin{bmatrix} HH^H & HF^H \\ FH^H & FF^H \end{bmatrix}$$

If the data streams transmitted simultaneously are extended from n streams to m streams, the number of data streams corresponding to the channel response F of the virtual user is (n-m). Then an inversion operation is performed on the extended matrix.

The second extension include: extending the matrix $HH^H$ by performing the conjugate multiplication on the channel response H of the space division user, and a matrix after the matrix $HH^H$ is extended is as follows:

$$\begin{bmatrix} HH^H & 0 \\ 0^H & I \end{bmatrix}$$

If n streams are extended to m streams, then I is an (m-n) * (m-n) dimensional identity matrix and 0 is an n * (m-n) dimensional zero matrix. Then an inversion operation is performed on the extended matrix.

Step S303: extracting the element corresponding to the space division user in the resulted matrix of the inversion operation.

The resulted matrix of the inversion operation (i.e., the inverse matrix of the extended matrix) can be obtained through Step S302. If the n streams are extended to m streams, the first n rows and the first n columns in the resulted matrix of the inversion operation are taken and marked as $HH_n^H$.

Step S304: obtaining a pre-coding matrix of the space division user through a Zero Forcing algorithm.

The Zero Forcing algorithm sends a signal (namely, a useful signal which is obtained by preprocessing by utilizing the pre-coding matrix of the space division user) to a target user, and sends a return-to-zero signal to other users, so that the other users cannot be interfered by the target user.

Herein, a user coding matrix is obtained by a formula of:

$$W = H^H HH_n^H$$

In other words, the space division multiplexing method according to the embodiment of the present disclosure first estimates the channel response of the space division user, then extends the matrix obtained by conjugate multiplication of the channel response of the space division user, performs an inverse operation on the extended matrix, then extracts the element corresponding to the space division user in the resulted matrix of the inverse operation, and finally obtains the pre-coding matrix of the space division user through the Zero Forcing algorithm.

It will be understood by those skilled in the art that all or part of the steps in the method for implementing the above embodiments can be completed by a program for instructing related hardware. The program can be stored in a computer readable storage medium and includes steps S301 to S304 when being executed. Herein, the storage medium can be ROM/RAM, magnetic disk, optical disk, and U disk, for example.

Taking the second extension as an example, detailed description will be provided by way of the following two examples.

1. If 2 streams are extended to 8 streams, the specific implementation is as follows.

Step 1: estimating a channel response of a space division user.

By using reciprocity of uplink and downlink channels of TDD, a channel response H of a downlink space division user can be obtained through a channel response of Sounding.

Step 2: extending a conjugate multiplication matrix of the channel response of the space division user, and performing an inversion operation on the extended matrix.

The matrix $HH^H$ by performing the conjugate multiplication on the channel response H of the space division user is extended, and a matrix after the matrix $HH^H$ is extended is as follows:

$$\begin{bmatrix} HH^H & 0 \\ 0^H & I \end{bmatrix}$$

I is a 6 * 6-dimensional identity matrix and 0 is a 2 * 6-dimensional zero matrix. Then an inversion operation is performed on the extended matrix.

Step 3: extracting the element corresponding to the space division user in the resulted matrix of the inversion operation.

The resulted matrix of the inversion operation can be obtained at Step 2. The first two rows and the first two columns in the resulted matrix of the inversion operation are taken and marked as $HH_2^H$.

Step 4: obtaining a pre-coding matrix of the space division user through a Zero Forcing algorithm.

The Zero Forcing algorithm sends a signal to a target user and sends a return-to-zero signal to other users, so that the other users are not interfered by the target user. Herein, a user coding matrix is obtained by a formula of:

$$W = H^H HH_2^H$$

2. If 4 streams are extended to 8 streams, the specific implementation is as follows.

Step 1: estimating a channel response of a space division user.

By using reciprocity of uplink and downlink channels of TDD, a channel response H of a downlink space division user can be obtained through a channel response of Sounding.

Step 2: extending a conjugate multiplication matrix of the channel response of the space division user, and performing an inversion operation on the extended matrix.

The matrix $HH^H$ by performing the conjugate multiplication on the channel response H of the space division user is extended, and a matrix after the matrix $HH^H$ is extended is as follows:

$$\begin{bmatrix} HH^H & 0 \\ 0^H & I \end{bmatrix}$$

I is a 4 * 4-dimensional identity matrix and 0 is a 4 * 4-dimensional zero matrix. Then an inversion operation is performed on the extended matrix.

Step 3: extracting the element corresponding to the space division user in the resulted matrix of the inversion operation.

The resulted matrix of the inversion operation can be obtained at the Step 2. The first four rows and the first four columns in the resulted matrix of the inversion operation are taken and marked as $HH_4^H$.

Step 4: obtaining a pre-coding matrix of the space division user through a Zero Forcing algorithm.

The Zero Forcing algorithm sends a signal to a target user and sends a return-to-zero signal to other users, so that the other users are not interfered by the target user. Herein, a user coding matrix is obtained by a formula of:

$$W = H^H HH_4^H$$

FIG. 4 is a second block diagram of an apparatus for space division multiplexing according to an embodiment of the present disclosure, and as shown in FIG. 4, the apparatus generally includes the following four modules: a channel estimation module 41, a matrix extension module 42 (which can implement the functions of the operation module 21 and the extension module 22 in FIG. 2), a matrix obtaining module 43 (which can implement the function of obtaining the element in the encoding module 23 in FIG. 2), and a weight obtaining module 44 (which can implement the function of obtaining the pre-coding matrix of the space division user in the encoding module 23 in FIG. 2).

The channel estimation module 41 is configured to estimate a channel response of a space division user;
The matrix extension module 42 is configured to extend a conjugate multiplication matrix of the channel response of the space division user and perform an inversion operation on the extended matrix;
The matrix obtaining module 43 is configured to extract the element corresponding to the space division users in the resulted matrix of the inversion operation;
The weight obtaining module 44 is configured to obtain a pre-coding matrix of the space division user through a Zero Forcing algorithm.

There is another apparatus for exploring event clues based on data screening according to an embodiment of the present disclosure includes:

a processor configured to carry out conjugate multiplication on a channel response matrix of a space division user to obtain a conjugate multiplication matrix, extend the conjugate multiplication matrix to obtain an extended matrix, perform an inversion operation on the extended matrix to obtain an inverse matrix of the extended matrix, and encode an element corresponding to the space division user in the inverse matrix to obtain a pre-coding matrix for the space division user; and
a memory connected with the processor and storing a program executable for the processor.

In summary, the embodiments of the present disclosure have the following technical effects:
The space division multiplexing method and the space division multiplexing apparatus can unify beam forming schemes of different space division users by constructing the virtual users, and can reduce the complexity of system realization.

It will be appreciated by those of ordinary skill in the art that all or some of the steps in the methods, and the functional modules/units in the systems and devices disclosed above may be implemented as software, firmware, hardware and suitable combinations thereof. In a hardware implementation, the division between functional modules/units mentioned in the above description does not necessarily correspond to the division of physical components. For example, a single physical component may have multiple functions, or a single function or step may be performed by several physical components in cooperation. Some or all of the components may be implemented as software executed by a processor, such as a digital signal processor or microprocessor, or as hardware, or as an integrated circuit, such as a dedicated integrated circuit. Such software may be distributed on computer-readable medium, which may include computer storage medium (or non-transitory medium) and communication medium (or transitory medium). As is known to those of ordinary skill in the art, the term computer storage medium includes volatile and nonvolatile, removable and non-removable medium implemented in any method or technology for storage of information such as computer readable instructions, data structures, program modules or other data. Computer storage medium includes, but is not limited to, RAM, ROM, EEPROM, flash memory or other memory technologies, CD-ROM, Digital Versatile Disks (DVD) or other optical disk storage, magnetic cassettes, magnetic tape, magnetic disk storage or other magnetic storage devices, or any other medium which can be used to store the desired information and which can accessed by a computer. Further, communication medium typically embodies computer readable instructions, data structures, program modules or other data in a modulated data signal such as a carrier wave or other transport mechanism and may include any information delivery medium, as is known to those of ordinary skill in the art.

Although the present disclosure has been described in detail above, the present disclosure is not limited thereto, and various modifications can be made by those skilled in the art in light of the principles of the present disclosure. Thus, modifications in accordance with the principles of the disclosure should be understood to fall within the scope of the disclosure.

Industrial applicability

With the space division multiplexing method and the space division multiplexing apparatus, the system complexity can be reduced while the performance of a communication system can be improved.

**Claims**

1. A space division multiplexing method, comprising:

   performing conjugate multiplication on a channel response matrix of a space division user to obtain a conjugate multiplication matrix; extending the conjugate multiplication matrix to obtain an extended matrix, and performing an inversion operation on the extended matrix to obtain an inverse matrix of the extended matrix; and encoding an element corresponding to the space division user in the inverse matrix to obtain a pre-coding matrix for the space division user.

2. The method according to claim 1, wherein the step of extending the conjugate multiplication matrix to obtain the extended matrix comprises:

   constructing a channel response matrix of a virtual user which is orthogonal to the channel response matrix of the space division user; and extending the conjugate multiplication matrix by using the channel response matrix of the virtual user to obtain the extended matrix.

3. The method according to claim 1, wherein the step of extending the conjugate multiplication matrix to obtain the extended matrix comprises: extending the conjugate multiplication matrix by using a zero matrix and an identity matrix to obtain the extended matrix.

4. The method according to claim 2 or 3, wherein the step of encoding an element corresponding to the space division user in the inverse matrix to obtain the pre-coding matrix for the space division user comprises: extracting the element corresponding to the space division user from the inverse matrix, and operating on the extracted element corresponding to the space division user by using a Zero Forcing algorithm to obtain the pre-coding matrix for the space division user.

5. The method according to claim 4, further comprising:

   transmitting a useful signal to the space division user, and transmitting a return-to-zero signal to other users, wherein the useful signal is obtained by preprocessing a signal to be transmitted by using the pre-coding matrix.

6. A space division multiplexing apparatus, comprising:

   an operation module, configured to perform conjugate multiplication on a channel response matrix of a space division user to obtain a conjugate multiplication matrix; an extension module, configured to extend the conjugate multiplication matrix to obtain an extended matrix, and perform an inversion operation on the extended matrix to obtain an inverse matrix of the extended matrix; and an encoding module, configured to encode an element corresponding to the space division user in the inverse matrix to obtain a pre-coding matrix for the space division user.

7. The apparatus according to claim 6, wherein the extension module is configured to construct a channel response matrix of a virtual user which is orthogonal to the channel response matrix of the space division user, and extend the conjugate multiplication matrix by using the channel response matrix of the virtual user to obtain the extended matrix.

8. The apparatus according to claim 6, wherein the extension module is configured to extend the conjugate multiplication matrix by using a zero matrix and an identity matrix to obtain the extended matrix.

9. The apparatus according to claim 7 or 8, wherein the encoding module is configured to extract the element corresponding to the space division user from the inverse matrix, and operate on the extracted element corresponding to the space division user by using a zero forcing algorithm to obtain the pre-coding matrix for the space division user.

10. The apparatus according to claim 9, further comprising:
a transmitting module, configured to transmit a useful signal to the space division user and transmit a return-to-zero signal to other users, wherein the useful signal is obtained by preprocessing a signal to be transmitted by using the pre-coding matrix.

11. A computer-readable storage medium storing computer-executable instructions, wherein when executed by a processor, the computer-executable instructions implement the method of any one of claims 1-5.

Perform conjugate multiplication on channel response matrix of space division user to obtain conjugate multiplication matrix — S101

Extend conjugate multiplication matrix to obtain extended matrix, and perform inversion operation on extended matrix to obtain inverse matrix of extended matrix — S102

Encode element corresponding to space division user in inverse matrix to obtain pre-coding matrix for space division user — S103

**FIG. 1**

| Operation module 21 | → | Extension module 22 | → | Encoding module 23 | → | Transmitting module 24 |

**FIG. 2**

Start

Estimate channel response of real downlink space division user — S301

Extend conjugate multiplication matrix of channel response of real downlink space division user, and perform inversion operation on extended matrix — S302

Extract element corresponding to real downlink space division user in resulted matrix of inversion operation — S303

Obtain pre-coding matrix of downlink space division user through Zero Forcing algorithm — S304

End

**FIG. 3**

| Channel estimation module 41 | → | Matrix extension module 42 | → | Matrix obtaining module 43 | → | Weight obtaining module 44 |
|---|---|---|---|---|---|---|

**FIG. 4**

## INTERNATIONAL SEARCH REPORT

| | International application No. |
|---|---|
| | PCT/CN2018/082489 |

### A. CLASSIFICATION OF SUBJECT MATTER

H04B 7/0456 (2017.01) i

According to International Patent Classification (IPC) or to both national classification and IPC

### B. FIELDS SEARCHED

Minimum documentation searched (classification system followed by classification symbols)

H04B, H04L, H04W

Documentation searched other than minimum documentation to the extent that such documents are included in the fields searched

Electronic data base consulted during the international search (name of data base and, where practicable, search terms used)

CNPAT, CNKI, WPI, EPODOC, 3GPP, IEEE, Google: MIMO, 预编码, 共轭, 相关, 等效, 扩展, 扩充, 零矩阵, 单位矩阵, 虚拟, 迫零, 逆, precoding, conjugate, correlation, extend, extension, expand, zero matrix, identity matrix, virtual, ZF, zero forcing, inversion

### C. DOCUMENTS CONSIDERED TO BE RELEVANT

| Category* | Citation of document, with indication, where appropriate, of the relevant passages | Relevant to claim No. |
|---|---|---|
| A | CN 102158270 A (BEIJING UNIVERSITY OF POSTS AND TELECOMMUNICATIONS et al.), 17 August 2011 (17.08.2011), description, paragraphs 37-77 | 1-11 |
| A | US 2015358056 A1 (SONY CORPORATION), 10 December 2015 (10.12.2015), entire document | 1-11 |
| A | CN 102025673 A (HUAWEI TECHNOLOGIES CO., LTD.), 20 April 2011 (20.04.2011), entire document | 1-11 |
| A | US 9461724 B1 (QUANTENNA COMMUNICATIONS, INC.), 04 October 2016 (04.10.2016), entire document | 1-11 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14 June 2018 | 27 June 2018 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer LI, Puxin Telephone No. 86-(10)-53961653 |
|---|---|

Form PCT/ISA/210 (second sheet) (January 2015)

## INTERNATIONAL SEARCH REPORT
### Information on patent family members

| International application No. |
| --- |
| PCT/CN2018/082489 |

| Patent Documents referred in the Report | Publication Date | Patent Family | Publication Date |
| --- | --- | --- | --- |
| CN 102158270 A | 17 August 2011 | None | |
| US 2015358056 A1 | 10 December 2015 | EP 2953274 A1 | 09 December 2015 |
| CN 102025673 A | 20 April 2011 | None | |
| US 9461724 B1 | 04 October 2016 | None | |

Form PCT/ISA/210 (patent family annex) (January 2015)